# EUROPÄISCHE PATENTSCHRIFT

(11) **EP 0 677 738 B1**
(45) Veröffentlichungstag und Bekanntmachung des Hinweises auf die Patenterteilung: **12.07.2000**
(21) Anmeldenummer: 95890083.9
(22) Anmeldetag: 11.04.1995
(51) Int. Cl.: G01N 21/77, G01N 21/64

(54) **Optochemischer Sensor sowie Verfahren zu seiner Herstellung**
Optochemical sensor and process for its production
Capteur optochimique et procédé de réalisation

(30) Priorität: 12.04.1994 AT 75394
(43) Veröffentlichungstag der Anmeldung: 18.10.1995
(73) Patentinhaber: Aussenegg, Franz Dr., 8020 Graz (AT); Brunner, Harald Dipl.-Ing., 8045 Graz (AT); Leitner, Alfred Dr., 8010 Graz (AT); PITTNER, Fritz, Dr., 1235 Wien (AT); SCHALKHAMMER, Thomas, Mag.Dr., 3072 Kasten (AT); Bauer, Georg, 1170 Wien (AT)
(72) Erfinder: Aussenegg, Franz, Dr., A-8020 Graz (AT); Brunner, Harald, Dipl-Ing., A-8045 Graz (AT); Leitner, Alfred, Dr., A-8010 Graz (AT); Pittner, Fritz, Dr., A-1235 Wien (AT); Schalkhammer, Thomas, Mag. Dr., A-3072 Kasten (AT)
(74) Vertreter: Babeluk, Michael, Dipl.-Ing. Mag.

(56) Entgegenhaltungen:
- CA-A- 2 076 709
- US-A- 5 015 843

## Beschreibung

Die Erfindung bezieht sich auf einen optochemischen Sensor zur Messung von Stoffkonzentrationen mit einer reaktiven Sensorschicht sowie auf ein Verfahren zur Herstellung eines derartigen optochemischen Sensors.

Optochemische Sensoren basieren darauf, daß eine chemische Reaktion zwischen dem Sensormaterial und dem Analyten zu einer Veränderung der optischen Eigenschaften des Sensors führt. Eine Veränderung der optischen Eigenschaften kann beispielsweise in einer Änderung der Absorptions- bzw. der Fluoreszenzeigenschaften liegen, sodaß die Reaktion in der Folge durch spektroskopische Methoden nachweisbar wird.

Aus der US 5 015 843 A ist ein optochemischer Sensor bekannt, bei welchem analytinduzierte Volumsänderungen eines makroskopischen Polymerteils in Änderungen der Lichtintensität umgesetzt werden, wobei einfache optomechanische Prinzipien angewandt werden. Die mechanische Expansion des Polymers verändert die Lage eines kleinen Spiegels an der Spitze eines zweiarmigen Lichtleiters, wodurch die den Detektor erreichende Lichtintensität beeinflußt wird. Dabei wird in einer Ausführungsvariante der Winkel des Spiegels relativ zur Achse des Lichtleiters und in einer anderen die Entfernung des Spiegels zum Ende des Lichtleiters verändert.

Aus der CA 2 076 709 A ist ein fluoreszenzoptischer Sensor bekannt, welcher auf einem Substrat einen Metallinselfilm und darauf eine fluoreszierende Schicht aufweist. Das Meßprinzip dieses Sensors besteht darin, daß der Analyt direkt die optischen Eigenschaften des Sensormaterials, nämlich die Fluoreszenzintensität der fluoreszierenden Schicht beeinflußt. Durch einen Energietransfer zwischen den angeregten Farbstoffmolekülen der fluoreszierenden Schicht und der Inselschicht wird die Fluoreszenzintensität beeinflußt bzw. verstärkt.

Optochemische Sensoren zur Messung chemischer Stoffkonzentrationen gewinnen zunehmend an Interesse, da sie gegenüber herkömmlichen Meßeinrichtungen wesentlich kürzere Ansprechzeit, eine größere mechanische Robustheit und eine Unempfindlichkeit gegenüber elektromagnetischen Einstreuungen sowie weitere Vorteile aufweisen. Wesentlich für derartige optochemische Sensoren ist allerdings, daß das Sensormaterial dem Angriff des Analyten entsprechend ausgesetzt ist, um eine kurze Ansprechzeit zu gewährleisten.

Die Erfindung zielt nun darauf ab, einen optochemischen Sensor der eingangs genannten Art zu schaffen, mit welchem insbesondere Stoffkonzentrationen, wie beispielsweise der pH-Wert oder die Ionenstärke, in besonders einfacher und reproduzierbarer Weise erfaßt werden kann, wobei auf die Verwendung von Elektroden verzichtet werden kann, und das Meßergebnis auch bei überaus geringen Änderungen der zu messenden Stoffkonzentration mit hoher Präzision und kurzer Meßzeit deutlich ablesbar ist.

Zur Lösung dieser Aufgabe besteht der optochemische Sensor der eingangs genannten Art im wesentlichen darin, daß eine reaktive, quellfähige Matrix vorgesehen ist, welche an einer Seite eine Spiegelschicht und an der gegenüberliegenden Seite eine Schicht aus einer Mehrzahl von Inseln aus elektrisch leitendem Material, insbesondere Metall aufweist, wobei der Durchmesser der Inseln kleiner ist als die Wellenlänge des für die Betrachtung bzw. Auswertung verwendeten Lichtes. Bei einem derartigen Sensor wird die Eigenschaft von Sensormaterialien ausgenützt, unter dem Einfluß der jeweils vorliegenden chemischen Umgebung das Volumen reversibel zu verändern, d. h. mit anderen Worten zu quellen bzw. zu schrumpfen. Ein derartiges Quellen bzw. Schrumpfen führt bei dem erfindungsgemäßen optochemischen Sensor zu einer Veränderung der optischen Dicke zwischen der Spiegelschicht und der Inselschicht, und dadurch, daß an der Außenseite eine Inselschicht vorliegt, ist die reaktive, insbesondere quellfähige Matrix dem Angriff des Analyten ungehindert ausgesetzt. Es kann somit mit relativ kurzer Ansprechzeit ein Quellen bzw. Schrumpfen beobachtet werden, und es hat sich überraschenderweise gezeigt, daß mit einer derartigen Struktur eine charakteristische Farbänderung bei Änderung der optischen Dicke der Matrix einhergeht. Die Ansprechzeit des Sensors ist wie bei allen Sensoren durch die Diffusionszeit des zu messenden Stoffes bis zum Sensormaterial bestimmt, und durch die erfindungsgemäße Ausgestaltung mit überaus dünnen Schichten kann ein entsprechend kurzer Diffusionsweg vorgegeben werden. Mit konventionellen interferometrischen Methoden lassen sich aber geringfügige Dickenänderungen dünner Schichten kaum erfassen. Überraschenderweise hat sich nun gezeigt, daß dann, wenn die Matrix zwischen einem Spiegel und einer Inselschicht angeordnet ist, nicht nur der ungehinderte Zutritt der zu messenden Lösung zur Matrix sichergestellt wird, sondern auch ein charakteristischer Farbumschlag aufgrund des anormal optischen Verhaltens der Inselschicht auftritt. Metallische Inselfilme mit einem Durchmesser der Inseln kleiner als die Wellenlänge des für die Betrachtung bzw. Auswertung verwendeten Lichtes zeigen eine starke Absorption, und als deren Folge zeigt das beschriebene Schichtsystem starke schmalbandige Reflexionsminima, deren spektrale Lagen extrem empfindlich von der Dicke der transparenten Zwischenschicht abhängen. Selbst geringste Änderungen einer extrem dünnen Zwischenschicht führen zu einer extrem starken spektralen Verschiebung des Reflexionsminimums und damit zu einer guten Erkennbarkeit von Konzentrationsänderungen mit entsprechend hoher Ansprechgeschwindigkeit aufgrund der extrem dünnwandigen Strukturen.

Mit Vorteil ist die erfindungsgemäße Ausgestaltung so getroffen, daß bei Verwendung einer metallischen Spiegelschicht als Metall für die Spiegelschicht und die Inselschicht Gold eingesetzt ist. Prinzipiell eignen sich auch andere Metalle, wie beispielsweise Aluminium und Silber, für die Ausbildung der Spiegelschicht bzw. der Inselschicht. Derartige andere Metalle sind jedoch dem chemischen Angriff in höherem Maße ausgesetzt als die erfindungsgemäß bevorzugt eingesetzte Inselschicht aus Gold. Gold zeichnet sich darüberhinaus durch besonders vorteilhafte Absorptionseigenschaften und damit durch hohe Empfindlichkeit und starke spektrale Verschiebung der Reflexionsminima aus.

Als Spiegelschicht können aber auch nichtmetallische Schichten Verwendung finden, wobei mit Vorteil die Ausbildung so getroffen sein kann, daß als Spiegelschicht die an der Grenze Polymer/Luft auftretende Fresnel-Reflexion genutzt wird.

Eine besonders starke spektrale Verschiebung wird dann beobachtet, wenn die Inseln einen Durchmesser aufweisen, welcher wesentlich kleiner ist als die Wellenlänge des für die Betrachtung bzw. Auswertung verwendeten Lichtes. Bevorzugt wird hiebei die Ausgestaltung so getroffen, daß die Inseln einen Durchmesser von kleiner 100 nm, insbesondere kleiner 60 nm, bei Verwendung von sichtbarem Licht zur Auswertung aufweisen.

Als reaktive, quellfähige Matrix können bevorzugt optisch transparente Polymere, wie z. B. Polyacrylsäurederivate oder Polyvinylpyrrolidonderivate, insbesondere Acrylsäure-Acrylamid Copolymere eingesetzt werden. Derartige Polymere zeichnen sich durch selektives Quellen bzw. Schrumpfen bei Ionenstärkenänderung bzw. einer Konzentrationsänderung des zu messenden Stoffes aus, wobei es genügt, einen derartigen Sensor in Kontakt mit einer Lösung zu bringen, deren Konzentration bestimmt werden soll. Bedingt durch die Dünnschicht und damit kurze Ansprechzeit und die relativ deutlich sichtbare starke spektrale Verschiebung der Reflexionsminima läßt sich ein Farbumschlag rasch und sicher erkennen. Gleichzeitig läßt sich aufgrund des relativ einfachen Aufbaues des optochemischen Sensors ein hohes Maß an mechanischer Stabilität gewährleisten. Um eine hinreichend rasche Ansprechzeit zu gewährleisten und gleichzeitig auch ausgeprägte spektrale Verschiebungen des Reflexionsminimums des Schichtsystems zu gewährleisten, wird mit Vorteil die Ausbildung so getroffen, daß die optische Dicke der Polymermatrix kleiner als 1000 nm, insbesondere kleiner als 600 nm gewählt wird. Zur Erhöhung der Ansprechgeschwindigkeit kann die optische Dicke unter 100 nm betragen, und es sind prinzipiell Schichtdicken von wenig über 10 bis 15 nm bei Wahl entsprechender Polymere ohne weiteres realisierbar.

Um die erfindungsgemäß gewünschte hohe Absorption bei gleichzeitig guter Permeabilität bzw. Durchlässigkeit für die Diffusion des zu analysierenden Stoffes aufrecht zu erhalten, ist mit Vorteil die Ausbildung so getroffen, daß die Inselschicht eine Massendicke von weniger als 20 nm, vorzugsweise weniger als 15 nm aufweist, wobei mit Vorteil für besonders hohe Empfindlichkeit die Inselschicht eine Absorption zwischen 40 und 60 % für die jeweils verwendete Wellenlänge des Lichtes aufweist.

Der erfindungsgemäße optochemische Sensor kann in einfacher Weise so hergestellt werden, daß auf die Metallschicht und die Polymerschicht der Inselfilm auf die Polymermatrix aufgedampft wird. Durch ein derartiges Aufdampfen lassen sich die erfindungsgemäß geforderten überaus geringen Massendicke und die Ausbildung voneinander getrennter Inseln sicherstellen, welche zu der charakteristischen starken spektralen Verschiebung der Reflexionsminima führen. Alternativ kann so vorgegangen werden, daß der Inselfilm durch Anlagerung von metallischen Partikeln bzw. Inseln an die Polymermatrix erzeugt oder verändert wird, oder daß die Inseln durch Abtragen von überschüssigem Metall auf der Polymerschicht erzeugt werden oder deren Zahl oder Größe verändert wird, wodurch die jeweils gewünschte Massendicke exakt eingestellt werden kann.

Um den Einsatzbereich der optochemischen Sensoren wesentlich zu erweitern, kann mit Vorteil die Herstellung so durchgeführt werden, daß an der Polymermatrix Enzyme oder Katalysatoren immobilisiert werden. Auf diese Weise kann ein bei einer enzymatischen oder katalytischen Umsetzung entstehender Stoff in seiner Konzentration unmittelbar in situ erfaßt werden, und der Einsatzbereich auf eine Reihe weiterer interessanter Anwendungsgebiete ausgedehnt werden. Mit Vorteil kann die Polymermatrix dadurch ausgebildet werden, daß für die Polymermatrix Polyvinylpyrrolidon mit einem Molekulargewicht zwischen 280 000 und 2 000 000 mit einem Bisazid, wie z. B. Na-4,4'-Diazidostilben-2,2'-disulfonattetrahydrat oder 2,6-Bis-(4-Azidobenzylidenmethylcylohexanon) vernetzt und unter UV-Bestrahlung vernetzt wird.

Wesentlich für die erfindungsgemäße Ausbildung ist somit, wie bereits eingangs erwähnt, die überaus dünnwandige Struktur, bei welcher mit wesentlich größeren Ansprechgeschwindigkeiten und kürzeren Ansprechzeiten gerechnet werden kann. Für die charakteristische optische Anzeige ist die anormale Absorption von Inselfilmen, insbesondere eine breitbandige Absorption im sichtbaren Bereich, wesentliche Voraussetzung, welche damit erklärt wird, daß die Elektronen in Teilchen mit nanometrischem Ausmaß begrenzt beweglich sind. Bei einer über eine derartiges Ausmaß hinausgehenden unbegrenzten Beweglichkeit, wie sie in zusammenhängenden Metallschichten üblich ist, wird in der Regel eine starke unspezifische Reflektivität beobachtet, die auch als metallischer Glanz bekannt ist. Insgesamt ergibt sich eine spezielle Form eines Reflexionsinterferenzfilters, bei welchem anstelle einer der beiden reflektierenden Schichten ein anormal absorbierender Inselfilm zum Einsatz gelangt, wodurch sich ein wesentlich anderes optisches Verhalten ergibt.

Prinzipiell kann mit verschiedenen optischen Dichten und verschiedenen Wellenlängen jeweils ein Optimum für die Ansprechgeschwindigkeit bei der Erfassung bestimmter Analyten aufgefunden werden. In Versuchen konnte gezeigt werden, daß Farbumschläge für eine visuelle Unterscheidung verschiedener Dicken in Inkrementen von etwa 10 bis 30 nm Änderung der optischen Dicke sicher erfaßt werden können, wobei die Änderung der optischen Dicke durch Änderung der Ionenstärke und damit verbundenes Schwellen der Polymermatrix entsteht, welche in einfacher Weise jeweils kalibriert werden kann. Im besonderen hat sich gezeigt, daß Sulfonsäuregruppen in einem Polymer zu einem Schrumpfen bei hoher Ionenstärke Anlaß geben können, und daß immer dann, wenn chemische Bedingungen eingehalten werden, welche nicht zur Zerstörung der Matrix oder des Inselfilms führen, auch volle Reversibilität der Prozesse beobachtet wird.

Die Änderung des Quellungsgrades eines ionischen Polymers durch Änderung des pH-Wertes kann auch durch eine vorgeschaltete biochemische Reaktion induziert werden, wobei beispielsweise bei Abspaltung von Harnstoff durch Urease eine pH-Wert-Verschiebung durch NH₃-Bildung, bei der Freisetzung von Glucose durch Glucoseoxidase eine pH-Verschiebung durch das Auftreten von Gluconsäure, und bei der Freisetzung von organischen Estern durch Lipasen bzw. Esterasen eine pH-Wert-Veränderung durch freie organische Säure beobachtet werden kann. Alle diese pH-Wert-Veränderungen können in situ und unmittelbar am Sensor zu einer Dickenänderung und damit zu einer optischen Anzeige ausgenützt werden.

Neben ionischen Polyacrylsäurederivaten als quellbare Polymere eignen sich fotostrukturierbare Enzymträger-Polymere, wie beispielsweise mit Bisaziden fotovernetzte Polyvinylpyrrolidone besonders für die Verwendung im Zusammenhang mit Enzymen, welche in einfacher Weise mit derartigen Polymerträgern immobilisiert werden können.

Schließlich lassen sich auch an den aufgedampften Metallinseln mikrokolloidale Partikel anlagern, welche in der Folge konzentrationsabhängige, reversible optische Veränderungen zur Folge haben.

Neben dieser reversiblen Verwendung des optischen Sensors sind naturgemäß auch optochemische Sensoren von Interesse, welche nach einmaliger Verwendung nicht neuerlich verwendet werden können. Derartige optochemische Sensoren können Reaktionen ausnützen, welche zur chemischen Destruktion der Metallinselstrukturen führen, wobei beispielsweise Goldinseln durch insitu-Entwicklung von Wasserstoffperoxid durch Oxidase-Enzyme und Reaktion mit Kaliumjodid oder Natriumcyanid zu einer Goldätzlösung aufgelöst werden können. Schließlich können beispielsweise Glucose, Glutamat, Lactat od. dgl. durch direkte Reaktion des Analyten mit dem Enzym zu einer chemischen Destruktion der Struktur führen und daher für die Verwendung als Einwegsensor eingesetzt werden.

Die Erfindung wird im folgenden anhand von Zeichnungen näher erläutert. Es zeigen:
- Fig. 1: eine schematische Darstellung des erfindungsgemäßen optochemischen Sensors,
- Fig. 2: ein Beispiel für eine reaktive Matrix des erfindungsgemäßen Sensors,
- Fig. 3: ein Diagramm, welches den Einfluß des pH-Wertes auf Schrumpf- und Quellvermögen eines Polymers zeigt und
- Fig. 4: die Zeitabhängigkeit eines Stabilitätstestes eines reversiblen pH-induzierten Schrumpf- und Quellvermögens.

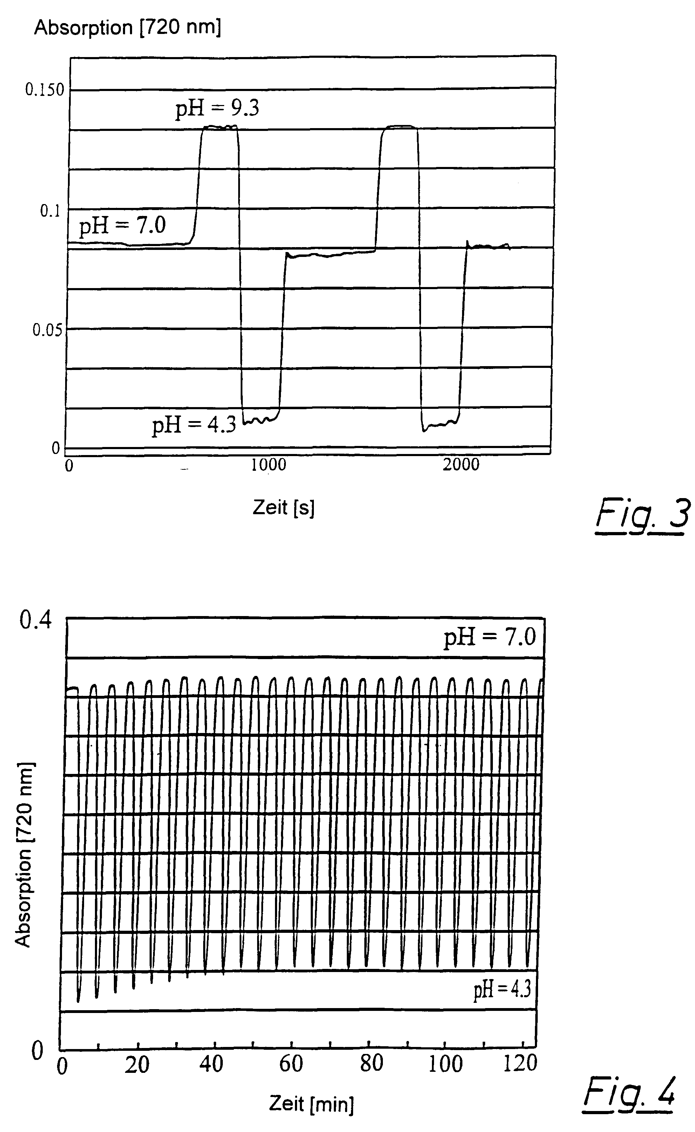

Der optochemische Sensor gemäß Ausführung nach Fig. 1 weist ein Substrat 1, beispielsweise ein Glasplättchen, mit einer 200 nm Goldbeschichtung als Spiegelschicht 2 auf. Zwischen der Spiegelschicht 2 und einem Film 3, bestehend aus einer Vielzahl von Inseln 5 aus elektrisch leitendem Material, befindet sich eine Matrixschicht 4. Die Matrixschicht 4 besteht aus einem quellfähigen Material. Die Matrixschicht 4 kann beispielsweise durch eine Vernetzungsreaktion aus Polyvinylpyrrolidon mit 4,4'-Diazidostilben-2,2'-disulfonatsäure gemäß Fig. 2 hergestellt werden.

Fig. 3 zeigt den Einfluß des pH-Wertes auf das Quell- und Schrumpfvermögen des Polymers unter der Verwendung eines Na₂HPO₄/NaH₂PO₄-Puffers (200 mM) im pH-Bereich 4,3 bis 9,3.

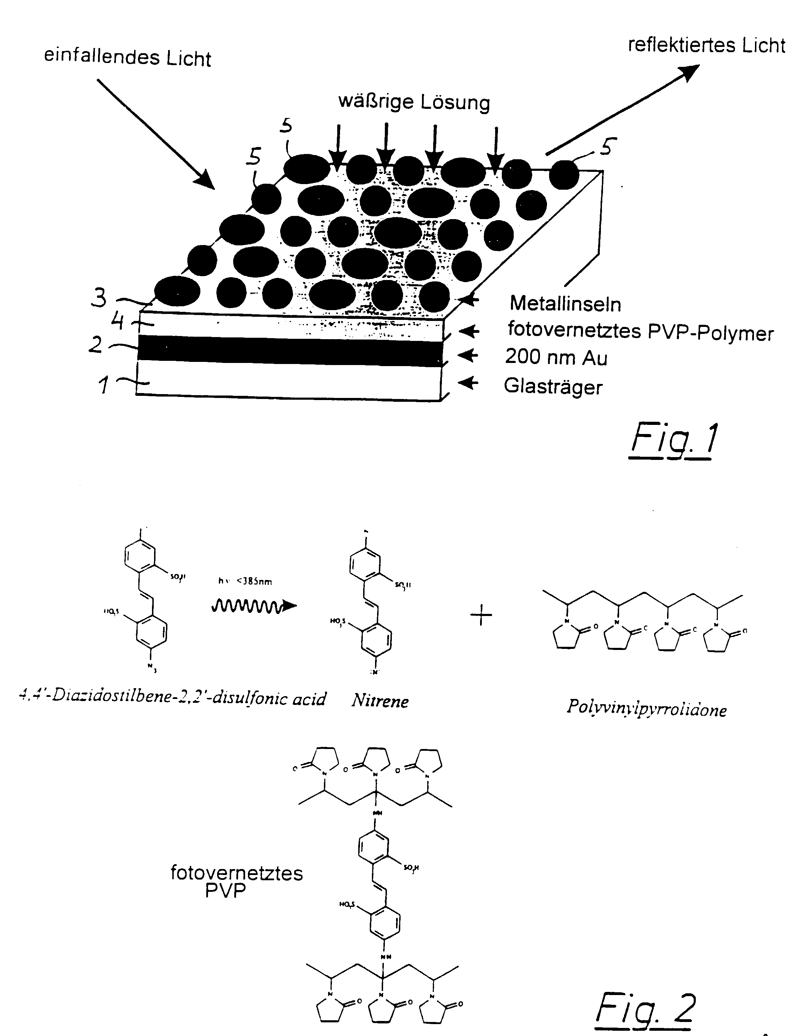

Fig. 4 zeigt die Absorption eines derartigen Sensors bei der Wellenlänge von 720 nm in Abhängigkeit des pH-induzierten Schrumpf- und Quellvermögens einer reaktiven Matrixschicht im pH-Bereich zwischen 4,3 und 7,0.

## Patentansprüche

1. Optochemischer Sensor zur Messung von Stoffkonzentrationen mit einer reaktiven Sensorschicht, **dadurch gekennzeichnet,** daß eine reaktive, quellfähige Matrix (4) vorgesehen ist, welche an einer Seite eine Spiegelschicht (2) und an der gegenüberliegenden Seite eine Schicht (3) aus einer Mehrzahl von Inseln (5) aus elektrisch leitendem Material, insbesondere Metall aufweist, wobei der Durchmesser der Inseln (5) kleiner ist als die Wellenlänge des für die Betrachtung bzw. Auswertung verwendeten Lichtes.

2. Optochemischer Sensor nach Anspruch 1, **dadurch gekennzeichnet,** daß als Metall für die Spiegelschicht (2) und die Inselschicht (3) Gold eingesetzt ist.

3. Optochemischer Sensor nach Anspruch 1, **dadurch gekennzeichnet,** daß als Spiegelschicht (2) die an der Grenze zwischen quellfähiger Matrix und Luft auftretende Fresnel-Reflexion genützt wird.

4. Optochemischer Sensor nach einem der Ansprüche 1 bis 3, **dadurch gekennzeichnet,** daß die Inseln (5) einen Durchmesser von kleiner 100 nm, insbesondere kleiner 60 nm, bei Verwendung von sichtbarem Licht zur Auswertung aufweisen.

5. Optochemischer Sensor nach einem der Ansprüche 1 bis 4, **dadurch gekennzeichnet,** daß als reaktive, quellfähige Matrix (4) optisch transparente Polymere, wie z. B. Polyacrylsäurederivate oder Polyvinylpyrrolidonderivate, insbesondere Acrylsäure-Acrylamid Copolymere eingesetzt sind.

6. Optochemischer Sensor nach einem der Ansprüche 1 bis 5, **dadurch gekennzeichnet,** daß die optische Dicke der Polymermatrix (4) kleiner als 1000 nm, insbesondere kleiner als 600 nm gewählt wird.

7. Optochemischer Sensor nach einem der Ansprüche 1 bis 6, **dadurch gekennzeichnet,** daß die Inselschicht (3) eine Massendicke von weniger als 20 nm, vorzugsweise weniger als 15 nm aufweist.

8. Optochemischer Sensor nach einem der Ansprüche 1 bis 7, **dadurch gekennzeichnet,** daß die Inselschicht (3) eine Absorption zwischen 40 und 60 % für die jeweils verwendete Wellenlänge des Lichtes aufweist.

9. Optochemischer Sensor zur Messung von Stoffkonzentrationen mit einer reaktiven Sensorschicht, **dadurch gekennzeichnet,** daß eine Matrix (4) vorgesehen ist, welche an einer Seite eine Spiegelschicht (2) und an der gegenüberliegenden Seite eine Schicht (3) aus einer Mehrzahl von Inseln (5) aus elektrisch leitendem Material, insbesondere Metall aufweist, wobei der Durchmesser der Inseln (5) kleiner ist als die Wellenlänge des für die Betrachtung bzw. Auswertung verwendeten Lichtes und der optochemische Sensor Reaktionen ausnützt, welche zur chemischen Destruktion der Inselstrukturen führen.

10. Verfahren zur Herstellung eines optochemischen Sensors zur Messung von Stoffkonzentrationen, **dadurch gekennzeichnet,** daß auf ein Substrat (1) eine Spiegelschicht (2) und auf die Spiegelschicht (2) eine abhängig von der zu messenden Stoffkonzentration quellfähige Polymermatrix (4) aufgebracht wird, sowie daß weiters auf die Polymermatrix (4) ein Inselfilm (3) aus einer Mehrzahl von Inseln (5) aus elektrisch leitendem Material aufgebracht wird, wobei der Inselfilm auf die Polymermatrix (4) aufgedampft, oder durch Anlagerung von metallischen Partikeln bzw. Inseln an die Polymermatrix erzeugt bzw. verändert wird oder die Inseln (5) durch Abtragen von überflüssigem Metall auf der Polymerschicht (4) erzeugt werden oder deren Zahl oder Größe verändert wird.

11. Verfahren nach Anspruch 10, **dadurch gekennzeichnet,** daß an der Polymermatrix Enzyme oder Katalysatoren immobilisiert werden.

12. Verfahren nach Anspruch 10 oder 11, **dadurch gekennzeichnet,** daß für die Polymermatrix Polyvinylpyrrolidon mit einem Molekulargewicht zwischen 280 000 und 2 000 000 mit Bisaziden, wie Na-4,4'-Diazidostilben-2,2'-disulfonatetrahydrat oder 2,6-Bis-(4-Azidobenzylidenmethylcylohexanon) versetzt und unter UV-Bestrahlung vernetzt wird.

## Claims

1. Optochemical sensor for measuring substance concentrations with a reactive sensor layer, **characterized in that** a reactive matrix 4 capable of swelling is provided, which exhibits a mirror layer 2 on one side and a layer 3 consisting of a plurality of islands 5 of electrically conductive material, especially metal, on the opposite side, the diameter of said islands 5 being smaller than the wavelength of the light used for monitoring and evaluation.

2. Optochemical sensor as claimed in claim 1, **characterized in that** the metal used for preparing the mirror layer 2 and the island layer 3 is gold.

3. Optochemical sensor as claimed in claim 1, **characterized in that** the Fresnel reflection occurring at the interface between swelling matrix and air is utilized for the mirror layer 2.

4. Optochemical sensor as claimed in any of claims 1 to 3, **characterized in that** the islands 5 have a diameter of less than 100 nm, and especially less than 60 nm, if visible light is used for evaluation.

5. Optochemical sensor as claimed in any of claims 1 to 4, **characterized in that** optically transparent polymers are used for the reactive matrix 4 capable of swelling, such as polyacrylic acid derivatives or polyvinyl pyrrolidone derivatives, and especially, acrylic acid acrylamide copolymers.

6. Optochemical sensor as claimed in any of claims 1 to 5, **characterized in that** the optical thickness of the polymer matrix 4 is less than 1,000 nm, and especially less than 600 nm.

7. Optochemical sensor as claimed in any of claims 1 to 6, **characterized in that** the island layer 3 has a mass thickness of less than 20 nm, and preferably, less than 15 nm.

8. Optochemical sensor as claimed in any of claims 1 to 7, **characterized in that** the island layer 3 has a light absorption of 40 to 60 percent for the particular wavelength used.

9. Optochemical sensor for measuring substance concentrations with a reactive sensor layer, **characterized in that** a matrix 4 is provided which comprises a mirror layer 2 on one side and a layer 3 consisting of a plurality of islands 5 of electrically conductive material, especially metal, on the opposite side, the diameter of said islands 5 being smaller than the wavelength of the light used for monitoring and evaluation, and the optochemical sensor utilizing reactions that lead to the chemical destruction of the island structures.

10. Method of producing an optochemical sensor for measuring substance concentrations, **characterized in that** a mirror layer 2 is deposited on a substrate 1, and a polymer matrix 4, which is capable of swelling in dependence of the substance concentration to be measured, is in turn deposited on said mirror layer 2, and further that an island film 3 consisting of a plurality of islands 5 of electrically conductive material is deposited on the polymer matrix 4, the island film 3 being vapor-deposited on the polymer matrix 4, or prepared or modified by attaching metallic particles or islands to the polymer matrix 4, or the islands 5 being produced, or their number or size being altered, by removing excess metal from the polymer layer 4.

11. Method as claimed in claim 10, **characterized in that** enzymes or catalysts are immobilized on the polymer matrix 4.

12. Method as claimed in claim 10 or 11, **characterized in that** polyvinyl pyrrolidone with a molecular weight of between 280,000 and 2,000,000 is treated with bisazides, such as Na-4,4'-diacidostilbene-2,2'-disulphonate-tetrahydrate, or 2,6-bis-( 4-acidobenzylidene-methylcyclohexanone ), and cross-linked with the use of ultraviolet radiation, in order to prepare the polymer matrix 4.

## Revendications

1. Capteur optochimique pour mesurer des concentrations de matières dans une couche réactive de capteur,
caractérisé par
- une matrice réactive (4) susceptible de gonfler, ayant sur une face une couche-miroir (2) et sur la face opposée une couche (3) formée de plusieurs îlots (5) en une matière conductrice électrique, notamment en métal,
- le diamètre des îlots (9) étant inférieur à la longueur d'onde de la lumière utilisée pour l'examen ou l'exploitation.

2. Capteur optochimique selon la revendication 1,
caractérisé en ce que
le métal de la couche-miroir (2) et des couches d'îlots (3) est de l'or.

3. Capteur optochimique selon la revendication 1,
caractérisé en ce que
la couche-miroir (2) est la réflexion de Fresnel produite à la limite entre la matrice susceptible de gonfler et l'air.

4. Capteur optochimique selon l'une des revendications 1 à 3,
caractérisé en ce que
les îlots (5) ont un diamètre inférieur à 100 nm, notamment inférieur à 60 nm pour l'application de lumière visible pour l'exploitation.

5. Capteur optochimique selon l'une des revendications 1 à 4,
caractérisé en ce que
la matrice (4) réactive susceptible de gonfler est constituée par des polymères optiquement transparents comme par exemple des dérivés d'acides polyacryliques ou des dérivés de polyvinylpyrrolidone, notamment des copolymères d'acide-acrylique et d'acrylamide.

6. Capteur optochimique selon l'une des revendications 1 à 5,
caractérisé en ce que
l'épaisseur optique de la matrice polymère (4) est inférieure à 1000 nm, notamment inférieure à 600 nm.

7. Capteur optochimique selon l'une des revendications 1 à 6,
caractérisé en ce que
la couche (3) des îlots a une épaisseur massique inférieure à 20 nm, de préférence inférieure à 15 nm.

8. Capteur optochimique selon l'une des revendications 1 à 7,
caractérisé en ce que
la couche des îlots (3) a une absorption comprise entre 40 et 60 % pour la longueur d'onde utilisée respective de la lumière.

9. Capteur optochimique pour mesurer les concentrations de matières dans une couche réactive de capteur,
caractérisé par
une matrice (4) ayant sur une face une couche-miroir (2) et sur la face opposée une couche (3) formée d'un ensemble d'îlots (5) en une matière conductrice électrique, notamment en métal,
le diamètre des îlots (5) étant inférieur à la longueur d'onde de la lumière utilisée pour l'observation ou l'exploitation et le capteur optochimique utilisant des réactions conduisant à la destruction chimique des structures d'îlots.

10. Procédé de fabrication d'un capteur optochimique pour mesurer les concentrations de matières,
caractérisé en ce que
sur un substrat (1) on applique une couche-miroir (2) et sur la couche-miroir (2) une matrice polymère (4) susceptible de gonfler en fonction de la concentration de matières à mesurer, et ensuite sur la matrice polymère (4) on applique un film d'îlots (3) formé de plusieurs îlots (5) en matière électrique conductrice,
le film d'îlots étant déposé à la vapeur sur la matrice polymère (4) ou produit ou modifié par dépôt de particules métalliques ou d'îlots sur la matrice polymère, ou encore les îlots (5) étant obtenus par enlèvement du métal en excès de la couche polymère (4) ou encore en modifiant leur nombre ou leur taille.

11. Procédé selon la revendication 10,
caractérisé en ce que
sur la matrice polymère on immobilise des enzymes ou des catalyseurs.

12. Procédé selon la revendication 10 ou 11,
caractérisé en ce que
pour la matrice polymère on mélange de la polyvinylpyrrolidone de poids moléculaire compris entre 280 000 et 2 000 000 avec des bi-azides tels que le Na-4,4'-diazidostilbene-2,2'-disulfonatetétrahydrate ou la 2,6-bis-(4-azidobenzylideneméthylcylohéxanone) et on réticule le mélange obtenu en appliquant un rayonnement UV.
